# FASCICULE DE BREVET EUROPEEN

(11) **EP 1 632 368 B1**
(45) Date de publication et mention de la délivrance du brevet: **14.11.2007**
(21) Numéro de dépôt: 04020958.7
(22) Date de dépôt: 03.09.2004
(51) Int. Cl.: B60C 23/04

(54) **Agencement d'une bobine de couplage magnetique et d'un circuit transpondeur sur une roue d'un vehicule**
Anordnung einer Spule zur magnetischen Koppelung und einer Transponderschaltung auf einem Fahrzeugrad
Arrangement of a coil for magnetic coupling and a transponder circuit on a vehicle wheel

(43) Date de publication de la demande: 08.03.2006
(73) Titulaire: Sokymat Automotive GmbH, 51580 Reichshof-Wehnrath (DE)
(72) Inventeur: Ening, Christian, 50735 Köln (DE)
(74) Mandataire: Laurent, Jean

(56) Documents cités:
- EP-A- 0 657 836
- WO-A1-20/04025543

## Description

L'invention concerne un agencement d'une bobine de couplage magnétique et d'un circuit transpondeur sur une roue d'un véhicule de manière à assurer une communication de données sans fil avec un circuit d'interrogation disposé sur une structure fixe du véhicule. La roue est montée sur cette structure, telle que le châssis ou la carrosserie, de manière à pouvoir tourner autour d'au moins un axe de rotation. La bobine de couplage magnétique, qui est montée de manière coaxiale à l'axe de rotation de la roue et définit une boucle fermée, sert d'interface de couplage inductif entre une bobine d'antenne du circuit transpondeur et une bobine d'excitation du circuit d'interrogation.

La communication de données sans fil à l'aide de signaux inductifs entre une bobine d'antenne d'un circuit transpondeur disposé sur une roue d'un véhicule et une bobine d'excitation d'un circuit d'interrogation monté sur la carrosserie du véhicule est bien connue. Un agencement du circuit transpondeur avec sa bobine d'antenne sur la roue peut être choisi de manière que la communication de données soit si possible indépendante de la position du transpondeur sur le pneu par rapport au circuit d'interrogation. Les données communiquées entre le circuit transpondeur et le circuit d'interrogation peuvent être des données d'identification et/ou des données de mesures effectuées par un ou plusieurs capteurs du circuit transpondeur.

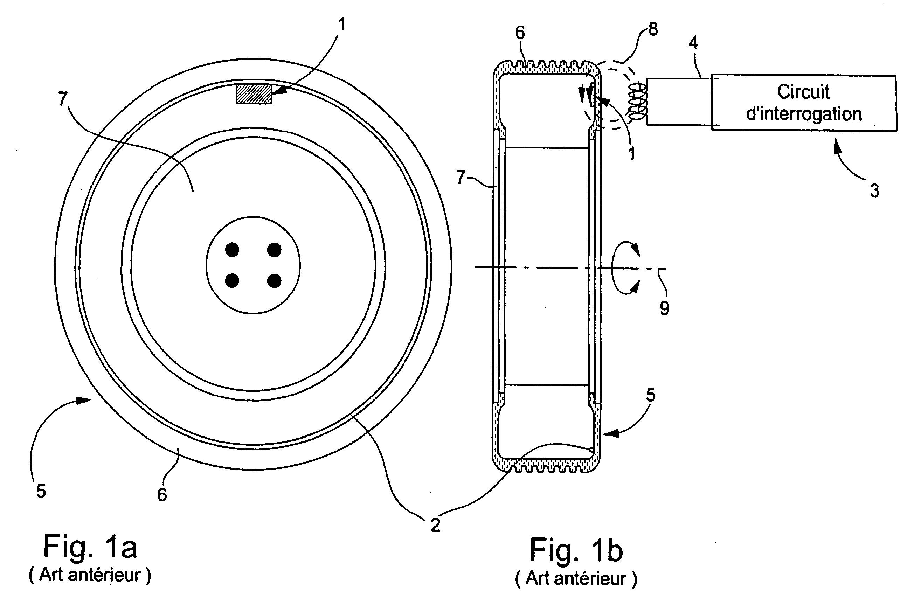

Comme on peut le voir en référence aux figures 1a et 1b, le circuit transpondeur 1 est par exemple monté sur une paroi intérieure du pneu 6 de la roue 5 du véhicule avec une bobine de couplage magnétique 2. Un circuit d'interrogation 3 fixé sur une structure fixe du véhicule communique des données au circuit transpondeur par le biais d'un champ magnétique primaire 8 produit par une bobine d'excitation 4.

La bobine de couplage magnétique 2 est montée de manière co-axiale à l'axe de rotation qui passe au centre de la jante 7 de la roue pour que la communication de données avec le circuit d'interrogation 3 soit si possible indépendante de la position du circuit transpondeur sur la roue. Cette bobine de couplage peut définir une boucle fermée afin de servir d'interface inductif entre la bobine d'excitation 4 du circuit d'interrogation 3 et une bobine d'antenne du circuit transpondeur, non représentée sur ces figures 1a et 1b. Cette bobine de couplage magnétique peut également être directement connectée au transpondeur pour servir de bobine d'antenne du circuit transpondeur.

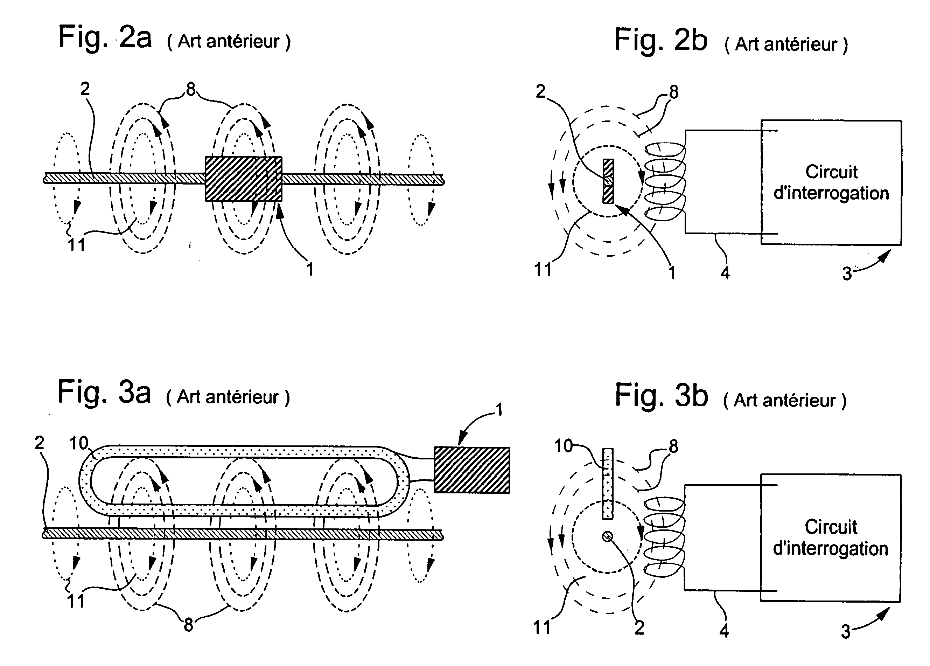

Dans l'exemple présenté aux figures 2a et 2b, le transpondeur 1 est connecté directement à la bobine de couplage magnétique 2 qui sert ainsi de bobine d'antenne du circuit transpondeur. Cette bobine de couplage 2 est disposée de préférence en périphérie du pneu du véhicule, comme décrit également dans le brevet DE 199 24 830, qui présente cette forme d'exécution. Le champ magnétique primaire 8 provenant de la bobine d'excitation 4 du circuit d'interrogation 3 induit un courant dans la bobine d'antenne. Ce courant induit produit également un champ magnétique secondaire 11 dans une direction opposée au champ magnétique primaire.

Comme le transpondeur 1 est connecté directement à la bobine de couplage magnétique en tant que bobine d'antenne du circuit transpondeur, il peut être intégré dans la structure du pneu dans une phase initiale des étapes de production du pneu. Cependant, il peut subir des contraintes mécaniques, qui sont liées à l'élévation de température, ainsi qu'à la flexion ou compression de certaines parties du pneu lorsque le véhicule est en mouvement, ce qui est un inconvénient, car en cas de défaut, il est relativement difficile de changer le circuit transpondeur.

Le transpondeur 1 peut être connecté à la bobine de couplage magnétique également après les étapes de fabrication du pneu à l'aide d'un connecteur spécifique. Toutefois avec un tel connecteur, il est constaté dans le temps, avec les diverses contraintes que subit le pneu, une mauvaise connexion du transpondeur à la bobine d'antenne, ce qui constitue également un inconvénient.

Dans l'exemple présenté aux figures 3a et 3b, le circuit transpondeur 1 comprend sa propre bobine d'antenne 10. Une bobine de couplage 2 en forme de boucle fermée sert comme interface de couplage inductif entre la bobine d'antenne du circuit transpondeur et une bobine d'excitation 4 du circuit d'interrogation 3.

Comme on peut le constater sur ces figures 3a et 3b quand le circuit transpondeur 1 se trouve à proximité de la bobine d'excitation 4, sa bobine d'antenne 10 est traversée par le champ magnétique induit 11 de la bobine de couplage, ainsi que par le champ primaire 8 qui s'oppose au champ magnétique induit 11. De ce fait, comme le champ magnétique primaire est de sens opposé au champ magnétique induit dans la bobine de couplage 2 en forme de boucle fermée, une perte d'information ou d'énergie peut être constatée au moment où le circuit transpondeur 1 se trouve en regard de la bobine d'excitation 4 du circuit d'interrogation.

Quand ce circuit transpondeur 1 est éloigné de la bobine d'excitation 4, uniquement le champ magnétique induit 11 dans le bobine de couplage 2 lui transmet l'énergie et les données. Malgré la présence de la bobine de couplage, la transmission d'énergie ou d'information est dépendante de la rotation de la roue 5 du véhicule donc de la position du circuit transpondeur sur ladite roue, ce qui est un inconvénient majeur. Ce problème peut être constaté également lors de la communication du circuit transpondeur au circuit d'interrogation.

On peut citer à ce titre la demande de brevet EP 1 354 729 qui décrit un agencement d'un circuit transpondeur avec une bobine de couplage magnétique comme décrit en référence aux figures 3a et 3b. Par contre, la bobine de couplage et le circuit transpondeur de surveillance et d'identification du pneu sont montés de préférence dans une paroi de roulement du pneu. Cependant, un tel agencement est également dépendant de la position du transpondeur par rapport à la bobine d'excitation d'un circuit d'interrogation, ce qui est un inconvénient.

Dans le document de brevet WO 2004/025543, il est décrit un dispositif pour la transmission inductive d'énergie et/ou de données entre un circuit primaire à bobine d'excitation et un circuit secondaire ayant une bobine d'antenne. Un circuit magnétique intermédiaire comprend une antenne qui forme une boucle fermée, disposée entre le circuit primaire et le circuit secondaire. Le circuit magnétique intermédiaire et le circuit secondaire sont montés sur une roue d'un véhicule, alors que le circuit primaire est monté sur une structure fixe du véhicule. Il est prévu soit une inductance de fuite dans le circuit secondaire, soit un élément de couplage du circuit magnétique intermédiaire ayant une branche de fuite de manière à obtenir une transmission d'information indépendamment de la position du circuit secondaire par rapport au circuit primaire. Cependant avec une telle inductance de fuite ou un tel élément de couplage, le couplage magnétique entre l'antenne du circuit secondaire et l'antenne du circuit magnétique est réduit, ce qui est un inconvénient.

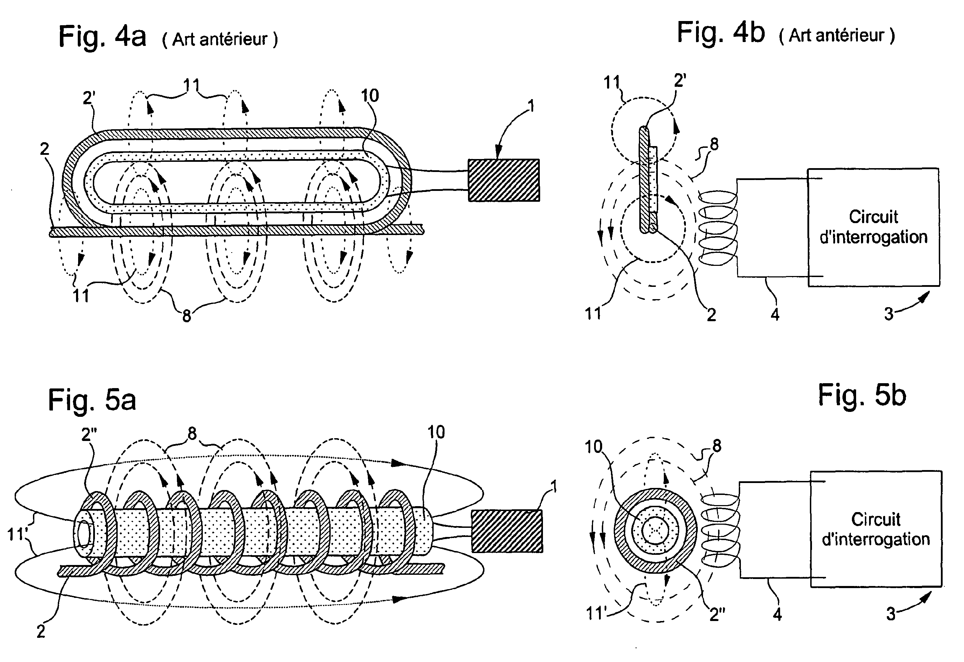

A titre de variante de réalisation présentée aux figures 4a et 4b, la bobine de couplage magnétique 2 peut comprendre une portion de boucle 2' entourant la bobine d'antenne 10 du circuit transpondeur 1. Ceci a pour conséquence d'augmenter l'intensité du champ induit 11 pénétrant dans la bobine d'antenne 10 sans modifier la dépendance de la position du transpondeur 1 comme indiqué ci-dessus. Lorsque le circuit transpondeur 1 se trouve à proximité de la bobine d'excitation 4 du circuit d'interrogation 3, le champ résultant pénétrant à travers la bobine d'antenne est la somme du champ magnétique primaire et du champ induit de signe opposé de la bobine de couplage, ce qui est un inconvénient pour la transmission de données et d'énergie électrique.

L'invention a donc pour but de pallier les inconvénients de l'art antérieur cité ci-dessus en fournissant un agencement d'une bobine de couplage magnétique et d'un circuit transpondeur sur une roue d'un véhicule pour communiquer avec un circuit d'interrogation monté sur la structure fixe du véhicule de manière à être indépendant de la position du circuit transpondeur sur la roue par rapport au circuit d'interrogation.

A cet effet, l'invention concerne un agencement d'une bobine de couplage magnétique et d'un circuit transpondeur sur une roue d'un véhicule cité ci-devant qui comprend les caractéristiques définies dans la revendication 1.

Un avantage de cet agencement réside dans le fait que même si la bobine d'antenne du circuit transpondeur se trouve à proximité de la bobine d'excitation du circuit d'interrogation, le champ induit dans la portion de boucle de la bobine de couplage est dans une direction sensiblement perpendiculaire au champ primaire. De ce fait, la bobine d'antenne ne capte que le champ magnétique induit dans la bobine de couplage sans être influencée par le champ magnétique primaire.

De préférence, la portion de boucle décrit un enroulement constitué de plusieurs spires dont l'axe des spires correspond ou est parallèle à l'axe des spires de la bobine d'antenne du circuit transpondeur. La bobine d'antenne peut être située à l'intérieur de l'enroulement de la portion de boucle de la bobine de couplage.

Le circuit transpondeur peut comprendre un ou plusieurs capteurs de mesure d'un paramètre physique. Il peut s'agir d'un capteur de pression pour la mesure de la pression des pneus du véhicule, d'un capteur de température, d'un capteur de force, d'un accéléromètre ou d'un autre type de capteur. Les mesures effectuées par le ou les capteurs du circuit transpondeur peuvent être transmises au circuit d'interrogation par couplage inductif dans les signaux inductifs par exemple par modulation d'amplitude.

La bobine de couplage en forme de boucle fermée, de plus grande dimension que la bobine d'antenne du circuit transpondeur, peut comprendre un fil décrivant au moins deux tours (spires). Cette bobine de couplage peut ainsi être disposée sur ou dans deux parois latérales intérieures du pneu de la roue du véhicule pour capter le champ magnétique primaire sans importance de l'orientation du pneu monté sur la jante de la roue.

Les buts, avantages et caractéristiques de l'agencement d'une bobine de couplage magnétique et d'un circuit transpondeur sur une roue d'un véhicule apparaîtront mieux dans la description suivante d'au moins une forme d'exécution illustrée par les dessins sur lesquels :
les figures 1a et 1b déjà citées représentent de manière simplifiée des vues de face et de côté partiellement en coupe d'un agencement traditionnel d'une bobine de couplage et d'un circuit transpondeur sur une roue en communication avec un circuit d'interrogation monté sur une structure fixe d'un véhicule,
les figures 2a et 2b déjà citées représentent de manière simplifiée des vues partielles de face et de côté d'une bobine de couplage connectée directement à un circuit transpondeur montés sur une roue de véhicule en communication avec un circuit d'interrogation monté sur une structure fixe du véhicule, selon l'art antérieur,
les figures 3a et 3b déjà citées représentent de manière simplifiée des vues partielles de face et de côté d'une bobine de couplage en boucle fermée et d'un circuit transpondeur à bobine d'antenne montés sur une roue en communication avec un circuit d'interrogation monté sur une structure fixe du véhicule, selon l'art antérieur,
les figures 4a et 4b déjà citées représentent de manière simplifiée des vues partielles de face et de côté d'une variante de réalisation de la bobine de couplage des figures 3a et 3b avec le circuit transpondeur en communication avec un circuit d'interrogation monté sur une structure fixe du véhicule, selon l'art antérieur, et
les figures 5a et 5b représentent de manière simplifiée des vues partielles de face et de côté d'une forme d'exécution d'un agencement d'une bobine de couplage magnétique et d'un circuit transpondeur sur une roue d'un véhicule, selon l'invention, en communication avec un circuit d'interrogation monté sur une structure fixe du véhicule.

On va décrire ci-après un mode préféré de réalisation de l'agencement d'une bobine de couplage magnétique et d'un circuit transpondeur d'une roue d'un véhicule de manière à pouvoir communiquer avec un circuit d'interrogation sur une structure fixe du véhicule. Il est à noter que dans la description suivante, tous les composants électroniques du circuit transpondeur ou du circuit d'interrogation, qui sont bien connus d'un homme du métier dans ce domaine technique, ne seront pas expliqués en détail.

Comme décrit précédemment en référence aux figures 1a et 1b, l'objet de l'invention concerne un agencement particulier d'une bobine de couplage magnétique 2 et d'un circuit transpondeur 1 montés sur une roue 5 d'un véhicule pour une communication sans fil avec un circuit d'interrogation 3 monté sur la structure fixe du véhicule. Une communication de données sans fil entre une bobine d'excitation 4 du circuit d'interrogation 3 et une bobine d'antenne du circuit transpondeur 1, non représentée sur les figures 1a et 1b, peut être effectuée grâce à la bobine de couplage 2, qui sert d'interface de couplage inductif. Pour ce faire, un champ magnétique primaire 8 est par exemple émis par la bobine d'excitation afin de traverser la bobine de couplage 2. Un champ magnétique induit dans cette bobine de couplage, de sens opposé au champ magnétique primaire 8, doit ensuite être capté par la bobine d'antenne du circuit transpondeur sans être influencée par le champ magnétique primaire 8 dans toute position du circuit transpondeur sur la roue comme expliqué ci-après en référence aux figures 5a et 5b.

La bobine de couplage magnétique 2, qui est de préférence de forme circulaire, est montée de manière co-axiale à l'axe de rotation 9, qui passe au centre de la jante 7 de la roue 5 du véhicule. Cette bobine de couplage 2 peut comprendre une ou plusieurs spires formant une boucle fermée, dont le plan général est sensiblement perpendiculaire à l'axe de rotation 9 de la roue. Cette bobine de couplage peut être intégrée dans la structure du pneu 6 du véhicule lors de sa fabrication par exemple, ou fixée sur une paroi latérale intérieure ou une paroi de roulement du pneu 6 de la roue 5. Le fil métallique de la boucle fermée de la bobine de couplage peut décrire des ondulations sous forme sinusoïdale sur une majeure partie de sa longueur de manière à compenser des changements de longueur notamment lors de la fabrication du pneu. Ce fil métallique peut être du cuivre, de l'aluminium, ou éventuellement de l'acier.

Bien entendu dans une forme d'exécution non représentée si la bobine de couplage 2 comprend plusieurs spires, elle peut être disposée sur ou dans deux parois latérales intérieures du pneu de la roue du véhicule. De cette façon, cette bobine de couplage peut servir d'interface de couplage magnétique pour capter le champ magnétique primaire 8 sans importance de l'orientation du pneu monté sur la jante de la roue, que le circuit transpondeur se trouve sur l'une ou l'autre paroi latérale du pneu.

Aux figures 5a et 5b, il est représenté partiellement une forme préférée de l'agencement de la bobine de couplage magnétique 2 et du circuit transpondeur 1 de la roue selon l'invention, en communication avec un circuit d'interrogation 3.

La bobine de couplage magnétique 2 comprend une portion de bobine 2" qui est configurée de telle manière que le champ induit 11' dans cette portion est orienté sensiblement perpendiculaire au champ magnétique primaire 8 produit par la bobine d'excitation 4 du circuit d'interrogation 3. Le champ induit dans le reste de la bobine de couplage est également dans une direction perpendiculaire au champ induit dans cette portion de bobine 2", mais de sens opposé au champ primaire 8 traversant le plan de la boucle de la bobine de couplage 2.

Le circuit transpondeur 1 comprend notamment un circuit intégré transpondeur et une bobine d'antenne 10, qui est constituée d'une multitude de spires de fil métallique, tel que du cuivre. Ce fil de cuivre isolé peut être disposé sur un noyau en ferrite. Les éléments du circuit transpondeur peuvent être montés par exemple sur une plaque à circuit imprimé souple ou rigide.

La bobine d'antenne 10 est de préférence introduite dans un enroulement de la portion 2" de la bobine de couplage, qui comprend également plusieurs spires. Cet enroulement peut être de longueur équivalente à la longueur de la bobine d'antenne.

L'axe des spires de l'enroulement de la portion 2" est parallèle à l'axe des spires de la bobine d'antenne 10. De cette manière, la bobine d'antenne 10 du circuit transpondeur n'est pénétrée que par le champ induit 11' de cette portion de bobine de couplage. La bobine d'antenne 10 n'est ainsi pas influencée par le champ magnétique primaire 8 perpendiculaire au champ induit 11' de cette portion 2", que le circuit transpondeur se trouve en regard de la bobine d'excitation 4 du circuit d'interrogation 3 ou dans une position éloignée. De ce fait, avec cet agencement de la bobine de couplage 2 et de la bobine d'antenne 10 selon l'invention, aucune perte d'information ou d'énergie n'est constatée lors d'une communication bidirectionnelle entre le circuit d'interrogation et le circuit transpondeur dans toute position du circuit transpondeur sur la roue.

Bien entendu, la bobine d'antenne 10 du circuit transpondeur 1 peut être placée aussi à proximité et en dehors de l'enroulement de la portion 2" de la bobine de couplage 2 tout en ayant l'axe des spires de la bobine d'antenne 10 parallèle à l'axe des spires de l'enroulement.

Le circuit transpondeur 1 de type passif peut comprendre également un ou plusieurs capteurs pour la mesure de paramètres physiques, tel que la pression du pneu, la température, la déformation du pneu, la vitesse de rotation. Dans le cas d'un capteur de pression, il peut être envisagé de l'encapsuler dans un boîtier plastique ou en verre avec une ouverture sur la membrane de mesure de pression. La taille du circuit transpondeur peut être de l'ordre de 5 mm en diamètre et 25 mm en longueur, voire de taille inférieure. Il est fixé sur une paroi latérale intérieure du pneu de préférence à l'intérieur de l'enroulement de la portion 2" à l'aide de crochets ou d'adhésif. Pour de plus amples détails relatifs au circuit transpondeur et au circuit d'interrogation et la manière de communiquer des données par des signaux inductifs, il peut être fait référence à la demande de brevet EP 03 004 618.9 au nom du Demandeur.

A partir de la description qui vient d'être faite, de multiples variantes de réalisation de l'agencement de la bobine de couplage magnétique et du circuit transpondeur sur la roue d'un véhicule peuvent être conçues par l'homme du métier sans sortir du cadre de l'invention défini par les revendications. Il peut être prévu que la bobine de couplage magnétique ait une forme polygonale tout en étant positionnée de manière coaxiale par rapport à l'axe de rotation de la roue du véhicule. Plusieurs portions de boucle orientées pour générer un champ induit perpendiculaire au champ primaire peuvent être prévues sur la bobine de couplage. Ainsi un circuit transpondeur avec sa propre bobine d'antenne peut être disposé près de chaque portion de boucle. Cette bobine de couplage peut comprendre plusieurs tours d'un fil métallique disposé sur une paroi latérale intérieure du pneu ou sur deux parois latérales, ainsi qu'éventuellement sur la paroi intérieure de la partie de roulement du pneu. Cette bobine de couplage à l'exception de la portion, qui comprend un enroulement de plusieurs spires, peut être intégré dans la gomme du pneu. Ainsi le circuit transpondeur peut être fixé à l'intérieur du pneu après les étapes de fabrication du pneu.

## Revendications

1. Agencement d'une bobine de couplage magnétique (2) et d'un circuit transpondeur (1) sur une roue de véhicule (5) pour une communication sans fil avec un circuit d'interrogation (3) disposé sur une structure fixe du véhicule sur laquelle la roue est montée de manière à pouvoir tourner autour d'au moins un axe de rotation (9), la bobine de couplage magnétique, qui est montée de manière coaxiale à l'axe de rotation de la roue et définit une boucle fermée, servant d'interface de couplage inductif entre une bobine d'antenne (10) du circuit transpondeur et une bobine d'excitation (4) du circuit d'interrogation, qui produit un champ magnétique primaire (8) traversant le plan général de la boucle fermée de la bobine de couplage, qui est sensiblement perpendiculaire à l'axe de la roue, **caractérisé en ce que** la boucle fermée de la bobine de couplage magnétique comprend une portion (2"), qui décrit un enroulement d'au moins une spire orienté de telle manière que le champ magnétique (11') dans la bobine de couplage magnétique, qui est induit par un champ magnétique primaire (8) produit par la bobine d'excitation du circuit d'interrogation, est dirigé dans cette portion sous forme d'enroulement dans une direction sensiblement perpendiculaire au champ magnétique primaire, et **en ce que** la bobine d'antenne (10) du circuit transpondeur, qui est disposée au niveau de la portion sous forme d'enroulement, est orientée de manière à n'être traversée que par le champ magnétique induit de la portion sous forme d'enroulement sans être influencée par le champ magnétique primaire.

2. Agencement selon la revendication 1, **caractérisé en ce que** la bobine d'antenne (10) du circuit transpondeur est disposé à l'intérieur de l'enroulement (2") de la portion de la boucle fermée, l'axe de l'enroulement, qui est parallèle à l'axe des spires de la bobine d'antenne, étant sensiblement perpendiculaire à l'axe de rotation de la roue.

3. Agencement selon la revendication 2, **caractérisé en ce que** l'enroulement de la portion de boucle (2") comprend plusieurs spires s'étendant sur une distance correspondant à la longueur de la bobine d'antenne (10) du circuit transpondeur dans la direction de l'axe des spires.

4. Agencement selon l'une des revendications précédentes, pour lequel la bobine de couplage (2) est disposée en périphérie de la roue sur ou dans une paroi latérale intérieure du pneu (6) de la roue du véhicule, la bobine d'excitation (4) du circuit d'interrogation (3) est disposée sur une partie de la carrosserie ou du châssis dudit véhicule en regard de la périphérie de la roue, **caractérisé en ce que** le transpondeur du circuit transpondeur (1) est de type passif pour être alimenté en énergie par le champ magnétique primaire transmis par la bobine d'excitation du circuit d'interrogation.

5. Agencement selon la revendication 4, **caractérisé en ce qu'**au moins la portion (2") de la boucle de la bobine de couplage n'est pas intégrée dans la paroi latérale intérieure du pneu, et **en ce que** le circuit transpondeur (1) est maintenu par collage ou à l'aide de crochets sur la paroi latérale intérieure du pneu, la bobine d'antenne (10) étant disposée dans un enroulement de la portion de boucle.

6. Agencement selon la revendication 4, **caractérisé en ce que** le circuit transpondeur comprend un capteur pour la mesure de pression et/ou un capteur pour la mesure de température encapsulé dans un boîtier plastique ou en verre.

7. Agencement selon l'une des revendications 1 et 2, **caractérisé en ce que** la boucle de la bobine de couplage magnétique (2), qui décrit au moins deux tours, est disposée sur ou dans deux parois latérales intérieures du pneu (6) de la roue du véhicule.

## Claims

1. Arrangement of a magnetic coupling coil (2) and a transponder circuit (1) on a vehicle wheel (5) for wireless communication with an interrogation circuit (3) arranged on a fixed structure of the vehicle on which the wheel is mounted so as to be able to rotate about at least one rotational axis (9), the magnetic coupling coil, which is coaxially mounted to the rotational axis of the wheel and defines a closed loop, acting as an inductive coupling interface between an antenna coil (10) of the transponder circuit and an excitation coil (4) of the interrogation circuit, which provides a primary magnetic field (8) crossing the general plane of the coupling coil closed loop, which is substantially perpendicular to the rotational axis of the wheel, **characterized in that** the closed loop of the magnetic coupling coil comprises a portion (2"), which describes a winding (2") of at least one turn oriented such that the magnetic field (11') in the magnetic coupling coil, which is induced by a primary magnetic field (8) generated by the excitation coil of the interrogation circuit, is directed in this loop portion in a substantially perpendicular direction to the primary magnetic field, and **in that** the antenna coil (10) of the transponder circuit, which is arranged on the coupling coil loop portion, is oriented such that only the induced magnetic field of the coupling coil loop portion passes therethrough without being influenced by the primary magnetic field.

2. Arrangement according to claim 1, **characterized in that** the transponder circuit antenna coil (10) is disposed inside the winding (2") of the closed loop portion, the winding axis, which is parallel to the axis of the turns of the antenna coil, being substantially perpendicular to the rotational axis of the wheel.

3. Arrangement according to claim 2, **characterized in that** the loop portion winding (2") comprises several turns extending over a distance corresponding to the length of the antenna coil (10) of the transponder circuit in the direction of the axis of the turns.

4. Arrangement according to any of the preceding claims, wherein the coupling coil (2) is arranged at the periphery of the wheel on or in an inner lateral wall of the tyre (6) of the vehicle wheel, the excitation coil (4) of the interrogation circuit (3) is arranged on a part of the body or chassis of said vehicle opposite the periphery of the wheel, **characterized in that** the transponder of the transponder circuit (1) is of the passive type to be supplied with energy by the primary magnetic field transmitted by the excitation coil of the interrogation circuit.

5. Arrangement according to claim 4, **characterized in that** at least the coupling coil loop portion (2") is not integrated in the inner lateral wall of the tyre, and **in that** the transponder circuit (1) is held by bonding or using hooks on the inner lateral wall of the tyre, the antenna coil (10) being arranged in a winding of the loop portion.

6. Arrangement according to claim 4, **characterized in that** the transponder circuit includes a pressure measurement sensor and/or a temperature measurement sensor encapsulated in a plastic or glass case.

7. Arrangement according to claims 1 or 2, **characterized in that** the loop of the magnetic coupling coil (2), which describes at least two turns, is arranged on or in two inner lateral walls of the tyre (6) of the vehicle wheel.

## Patentansprüche

1. Anordnung aus einer Magnetkopplungsspule (2) und einer Transponder-Schaltung (1) an einem Fahrzeugrad (5) für eine drahtlose Kommunikation mit einer Abfrageschaltung (3), die an einer festen Struktur des Fahrzeugs angeordnet ist, an der das Rad so angebracht ist, dass es sich um wenigstens eine Drehachse (9) drehen kann, wobei die Magnetkopplungsspule, die koaxial zu der Drehachse des Rades angebracht ist und eine geschlossene Schleife definiert, als Induktionskopplungsschnittstelle zwischen einer Antennenspule (10) der Transponder-Schaltung und einer Erregungsspule (4) der Abfrageschaltung dient, die ein primäres Magnetfeld (8) erzeugt, die durch die allgemeine Ebene der geschlossenen Schleife der Kopplungsspule verläuft, die zu der Drehachse im Wesentlichen senkrecht ist, **dadurch gekennzeichnet, dass** die geschlossene Schleife der Magnetkopplungsspule einen Abschnitt (2") umfasst, der eine Wicklung aus wenigstens einer Windung beschreibt, die in der Weise orientiert ist, dass das Magnetfeld (11') in der Magnetkopplungsspule, das durch ein primäres Magnetfeld (8) induziert wird, das durch die Erregungsspule der Abfrageschaltung erzeugt wird, in diesem Abschnitt in Form einer Wicklung in eine Richtung gelenkt wird, die zu dem primären Magnetfeld im Wesentlichen senkrecht ist, und dass die Antennenspule (10) der Transponder-Schaltung, die auf Höhe des Abschnitts in Form einer Wicklung angeordnet ist, so orientiert ist, dass durch sie nur das induzierte Magnetfeld des Abschnitts in Form einer Wicklung verläuft, ohne dass sie durch das primäre Magnetfeld beeinflusst wird.

2. Anordnung nach Anspruch 1, **dadurch gekennzeichnet, dass** die Antennenspule (10) der Transponder-Schaltung in der Wicklung (2") des Abschnitts der geschlossenen Schleife angeordnet ist, wobei die Wicklungsachse, die zu der Achse der Windungen der Antennenspule parallel ist, zu der Drehachse des Rades im Wesentlichen senkrecht ist.

3. Anordnung nach Anspruch 2, **dadurch gekennzeichnet, dass** die Wicklung des Schleifenabschnitts (2") mehrere Windungen umfasst, die sich über eine Distanz erstrecken, die der Länge der Antennenspule (10) der Transponder-Schaltung in Richtung der Achse der Windungen entspricht.

4. Anordnung nach einem der vorhergehenden Ansprüche, bei der die Kopplungsspule (2) am Umfang des Rades an oder in einer inneren Seitenwand des Reifens (6) des Fahrzeugrades angeordnet ist und die Erregungsspule (4) der Abfrageschaltung (3) an einem Teil der Karosserie oder des Chassis des Fahrzeugs gegenüber dem Umfang des Rades angeordnet ist, **dadurch gekennzeichnet, dass** der Transponder der Transponder-Schaltung (1) vom passiven Typ ist, um durch das primäre Magnetfeld, das von der Erregungsspule der Abfrageschaltung übertragen wird, mit Energie versorgt zu werden.

5. Anordnung nach Anspruch 4, **dadurch gekennzeichnet, dass** wenigstens der Abschnitt (2") der Schleife der Kopplungsspule nicht in die innere Seitenwand des Reifens integriert ist und dass die Transponder-Schaltung (1) durch Kleben oder mit Hilfe von Haken an der inneren Seitenwand des Reifens gehalten wird, wobei die Antennenspule (10) in einer Wicklung des Schleifenabschnitts angeordnet ist.

6. Anordnung nach Anspruch 4, **dadurch gekennzeichnet, dass** die Transponder-Schaltung einen Sensor zum Messen des Drucks und/oder einen Sensor zum Messen der Temperatur, der in ein Kunststoff- oder Glasgehäuse eingekapselt ist, umfasst.

7. Anordnung nach einem der Ansprüche 1 und 2, **dadurch gekennzeichnet, dass** die Schleife der Magnetkopplungsspule (2), die wenigstens zwei Umläufe beschreibt, an oder in zwei inneren Seitenwänden des Reifens (6) des Fahrzeugrades angeordnet ist.
